(19) Europäisches Patentamt
European Patent Office
Office européen des brevets

(11) **EP 1 754 955 B1**

(12) **EUROPEAN PATENT SPECIFICATION**

(45) Date of publication and mention
of the grant of the patent:
**06.05.2015 Bulletin 2015/19**

(51) Int Cl.:
**G01C 21/34** *(2006.01)*    **G08G 1/0968** *(2006.01)*
**G08G 1/0969** *(2006.01)*

(21) Application number: **05018099.1**

(22) Date of filing: **19.08.2005**

(54) **Navigation method and corresponding system for determining a travel related time**

Navigationsverfahren und entsprechendes System zur Bestimmung einer Fahrtbezogenen Zeit

Méthode de navigation et système correspondant pour la détermination d'un temps relatif à un trajet

(84) Designated Contracting States:
**AT BE BG CH CY CZ DE DK EE ES FI FR GB GR HU IE IS IT LI LT LU LV MC NL PL PT RO SE SI SK TR**

(43) Date of publication of application:
**21.02.2007 Bulletin 2007/08**

(73) Proprietor: **AISIN AW CO., LTD.**
**Anjo-shi, Aichi 444-1192 (JP)**

(72) Inventors:
• **Xu, Tang**
**c/o Intellectual Property Division**
**Okazaki-shi**
**Aichi 444-8564 (JP)**

• **Fukaya, Takaharu**
**Intellectual Property Division**
**Okazaki-shi**
**Aichi 444-8564 (JP)**

(74) Representative: **Kramer Barske Schmidtchen**
**Patentanwälte PartG mbB**
**European Patent Attorneys**
**Landsberger Strasse 300**
**80687 München (DE)**

(56) References cited:
**EP-A- 1 496 338        EP-A- 1 505 370**
**US-A1- 2003 074 132**

• **PATENT ABSTRACTS OF JAPAN vol. 2003, no. 12, 5 December 2003 (2003-12-05) & JP 2005 174198 A (MIZUTANI YOSHIAKI), 30 June 2005 (2005-06-30)**

EP 1 754 955 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention relates to a method of determining a travel related time adapted for use in a navigation system and a navigation system implementing such a method.

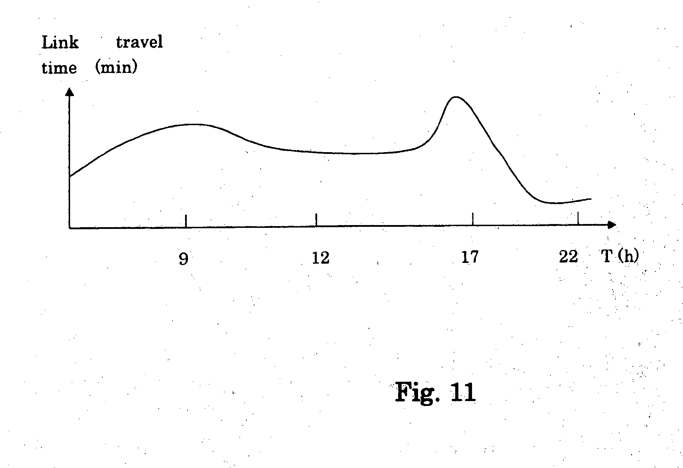

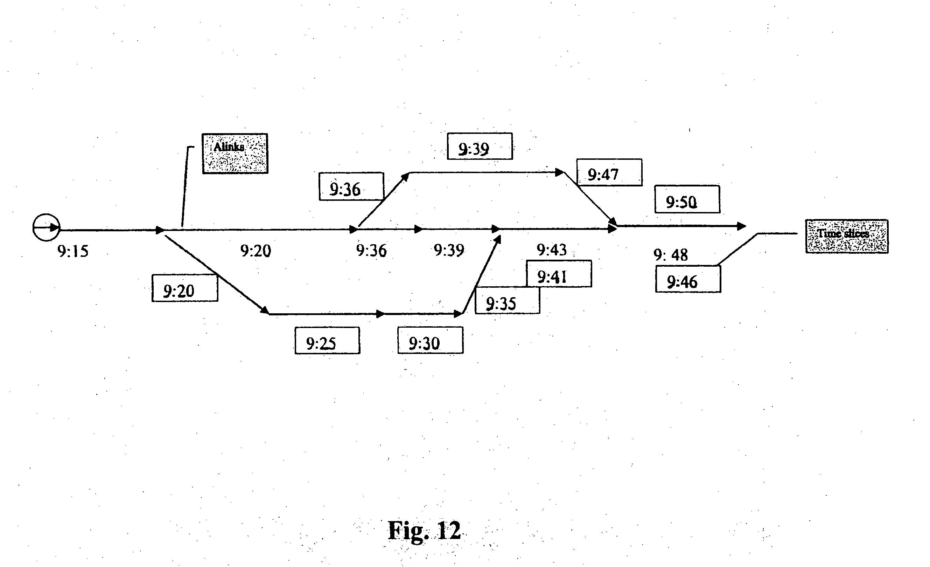

Navigation systems using a travel time database that provides the time likely needed to travel through each section/link of a corresponding road network are known. In such conventional navigation systems, every link in the search area must have an individual time slice, i.e. an assigned travel time which depends on the arrival time at the starting point of the link. It is clear that the individual time slice varies with the arrival time. Fig. 11 shows a visualisation of the time slice (link travel time) for one link over the time of a day. A corresponding travel time database typically includes such data on a 24-hour/7-days-a-week base. In route searching applications and the like, the time slice to be used for each link is unknown before the time slice of the previous link was decided, as it is clear from Fig. 12.

Accordingly, such a system requires a lot of processing power to be embedded in the system in order to perform route searching or travel time estimations or the like.

EP 1 496 338 A2 describes another approach for route searching, wherein statistically processed historical traffic data are used for a timeslice-based route searching based on a client-server-structure, in which all the possible departure and destination location/time combinations are considered and stored as pre-calculated data sets. At the time of a calculation request for a corresponding time slice to be used for calculation, the corresponding data set will be sent from the server with all the necessary information.

JP 2004-301677 A describes another approach for a timeslice-based route searching based on statistically processed historical traffic data, wherein the arrival time for a specific mesh-area is calculated using the distance between the target mesh and the departure mesh, after a corresponding destination was defined.

EP 1 505 370 A1 and US 2003/074132 A1 disclose a method according to the preamble of claim 1 and a system according to the preamble of claim 8.

These approaches require the pre-calculation and the storage of enormous data amounts.

It is an object of the present invention to provide a method for determining a travel related time like a travel or arrival or passing time in a navigation system and a corresponding navigation system using such a method reducing the required embedded processing power and/or the required pre-calculated and/or pre-stored data amounts in determining travel related times in navigation or other location based applications.

This object is achieved by a method according to claim 1 and a navigation system according to claim 8.

Further developments of the invention are given in the dependent claims.

The invention provides the possibility to calculate time slices to be used for an optimum route searching or, as far as arrival time estimation to any target area is concerned so as to estimate the traffic situation up to the target area in a reasonably precise way, by a local machine base real time calculation of time slices, even in cases where no destination is defined, as long as a departure point can be manually set or automatically detected by a device such a GPS receiver.

Because of the use of the new mesh-based calculation approach, wherein the time slices for road links are assigned based on road edge information between meshes or mesh groups and, optionally, other additional information such as the existence of highway exits within a mesh or the meshes of a mesh group, the processing power needed for the calculation as well as the pre-calculated and/or the stored data amounts required for the calculations are significantly reduced.

It is made possible to estimate the time needed to reach a specific road link within a mesh area by grouping road links and ignoring the individual differences among links within one defined region (mesh or mesh-group) and/or within the same classification. As a result, all the road links within one mesh or within the same classification within one mesh will carry the same offset (or time slice) for route searching or for other applications such as the arrival time estimation.

The concept of the invention uses a division of the maps of the geographic areas covered by the database into a mesh grid such as a number of rectangles with fixed sizes. In other words, the road links included in conventional databases are overlaid with a mesh structure. The overlaid structure is used to look at the edges of the meshes and the links (roads) crossing these edges (borders or borderlines between adjacent meshes). Based on this approach, the offset of all meshes compared to the mesh with the offset "0" (= the mesh including the origin point) are determined.

It is possible to assign one single offset to each mesh, or to assign plural offsets to one mesh depending on the type of the links (roads) included in the mesh.

Further features and advantages of the present invention will be described apparent from the following description of embodiments referring to the drawings, which show:

Fig. 1          a schematic block diagram of a navigation system adapted to implement embodiments of the present invention;

Fig. 2a), b)    a flow chart of a method according to a first embodiment of the present invention;

Fig. 3          a representation of a simple application of the concept of the present invention;

Fig. 4          a representation of two adjacent meshes for explaining a modification of the application shown in Fig. 3;

Fig. 5a), b)    flow charts showing a process of offset assignments in Fig. 5a), and showing a specific implementation of the offset assignments in steps S450 to S480 of Fig. 5a) in Fig. 5b);

Fig. 6          one example of assigning offsets to groups of meshes;

Fig. 7          one example of assigning individual offsets to each mesh;

Fig. 8          an example of a time map output in step S50 in Fig. 2;

Fig. 9          an example of a modification for differently treating the surrounding area of the origin point;

Fig. 10         a representation of the concept of a short route searching;

Fig. 11         a visualization of the varying travel time for a single link; and

Fig. 12         a conventional time slice approach for optimum route searching.

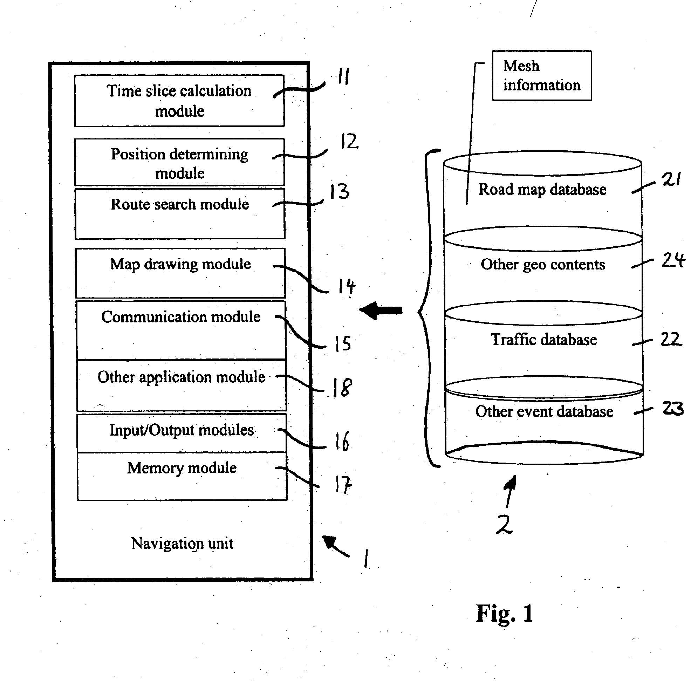

Fig. 1 shows a schematic representation of a navigation system for implementing the present invention.

A navigation unit 1, which is preferably a unit adapted to be used in a vehicle like a car, comprises several functional units such as a time slice calculation module 11, a position determining module 12 such as a GPS receiver, a route search module 13, a map drawing module 14, a communication module 15, an input/output module 16, a memory module 17 and other application modules 18. The navigation unit has access to a database 2 comprising a road map database 21, a traffic data base 22, an event database 23, and an other-geo-contents database 24. The road map database 21 includes road map data such as link data, node data, and so on in a conventional manner with additional mesh information which mesh information divides the area covered by the road map data into a mesh grid. The mesh grid consists of a preferably regular grid of meshes which meshes can have a rectangular or other polygonal shape allowing to define boarders (edges, boarderlines) between adjacent meshes of the mesh grid. In a preferred embodiment, the meshes are rectangular, preferably square, with fixed sizes. However, other grids such as grids including meshes with triangular or hexagonal or other polygonal shapes could be used. In the following, a mesh grid of square meshes having identical sizes is considered for the sake of simplicity.

The traffic database 22 includes information on forecast traffic situation such as statistically processed historic traffic data, and the event database 23 includes time-relevant event information with respect to road links such as a concert at a concert hall, a football match in a sports stadium and so on.

In has to be understood that the database 2 can be fully or partly included in the navigation unit, e.g. stored in the memory module 17 or that parts of the database or the complete database can be stored in an external memory and accessed via the communication module 15.

It is preferred to include at least the road map database with the mesh information in the navigation unit 1 in order to implement a navigation unit being capable of determining travel related times like a travel time or an arrival time or a passing time (at which a certain geographical point is passed) using the mesh-based calculation.

The time slice calculation module 11 is adapted to implement the time slice calculation as will be described later, based on the position of the vehicle such as a car determined by the position determining module 12 or any other position input by the user via a human machine interface or the like.

The result of the time slice calculation performed by the time slice calculation module 11 can be used in subsequent processings by the route search module 13, the map drawing module 14 or other modules.

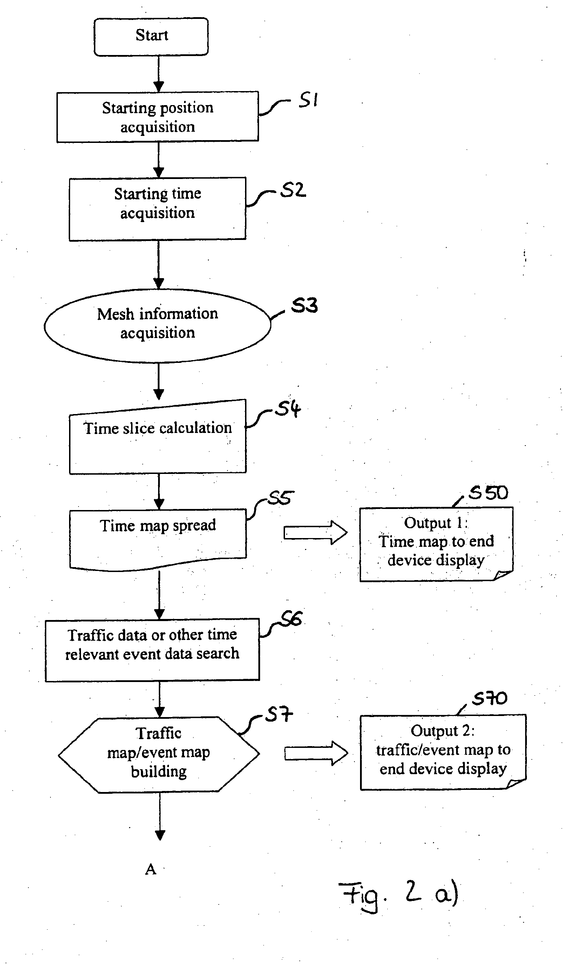

In the following, referring to Fig. 2a) and b), the operation of the navigation unit 1 using information stored in database 2 will be explained.

After start of the operation, the (start) position to be used in the calculation and the starting time for the corresponding calculation are acquired in steps S 1 and S2. In step S3, the mesh information is acquired from road map database 21. If the application does not consider the starting time, step S2 is not necessary.

In step S4, a time slice calculation is performed by the time slice calculation module 11 in a manner described further below. The result of the time slice calculation of step S4 is used to spread (generate) a time map in step S5. A correspondingly generated time map may be optionally output on a display such as a display included in the input/output module 16 in step S50.

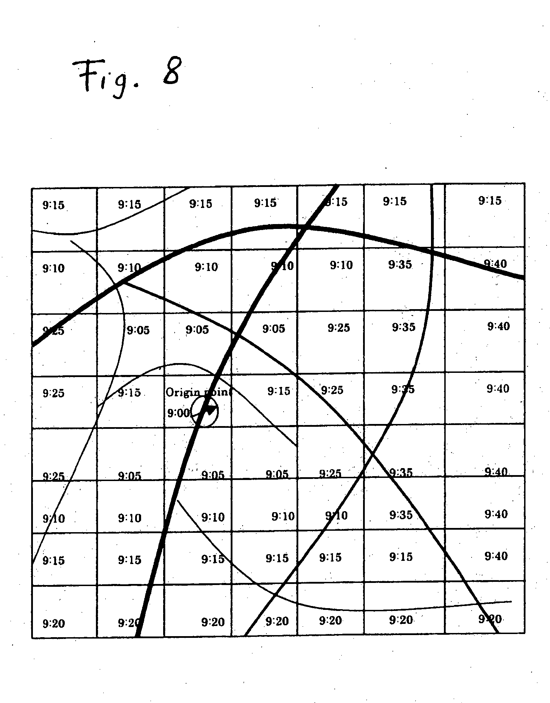

If the output of a time map, an example of which is shown in Fig. 8, was the intended final result of the process, the process flow will skip to the END. Otherwise or alternatively to steps S5 and S50, that means if a more sophisticated application is run, one option is that the results of the time slice calculation of step S4 can be used together with traffic data or other time relevant event data searched in and acquired from traffic database 22 and/or event database 23 in step S6 to generate the traffic and/or event map in step S7 as described in greater detail below. Such a traffic and/or event map can be output in step S70. Of course, travel times (15 min, ...) could be displayed instead of arrival/passing times (9:00; 9:10; etc.).

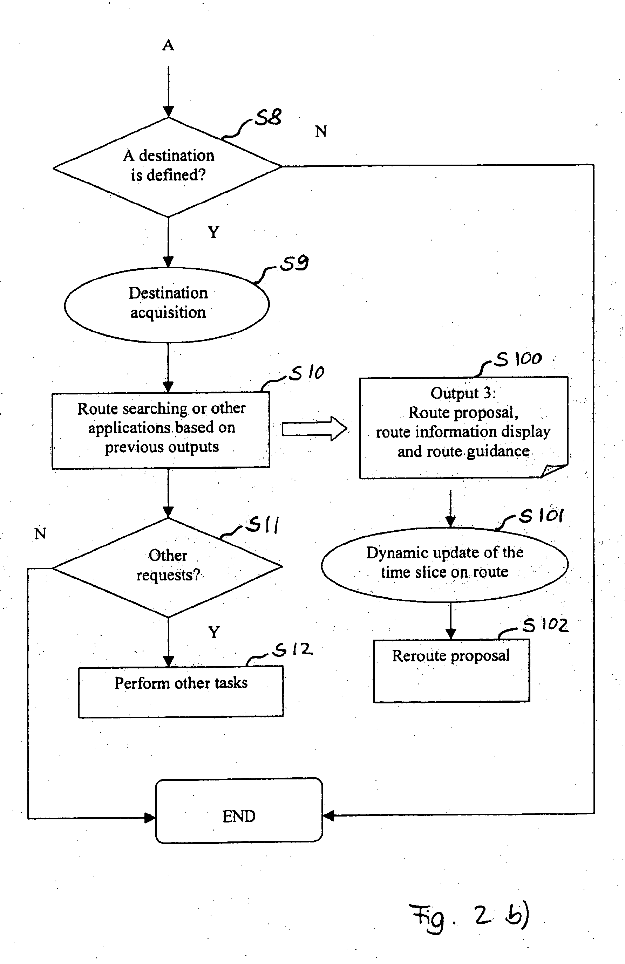

Additionally or alternatively to steps S5, S50 and/or steps S7, S70, the data obtained in the time slice calculation of step S4 can be used for route searching or other applications as shown in Fig. 2b). If a destination is defined, i.e. YES in step S8, the relevant data on the destination are acquired from database 2 in step S9.

In step S10, an optimum route searching and/or other applications based on the results of the previous steps are performed. The results, such as a route proposal, route information display and/or route guidance can be output in step S100, for example on the display or as audio output and the like.

Optionally, in step S101, a dynamic update of the time slices of the route based on updated position and time data can be made. Furthermore, optionally in step S102, a re-route proposal or the like can be made as well known in the art, based on the updated position and time information. The dynamic update in step S101 and the re-route proposal processing in step S102 can be performed as known in the art, using either conventional time slice technique or alternatively the results of an updated time slice calculation according to step S4.

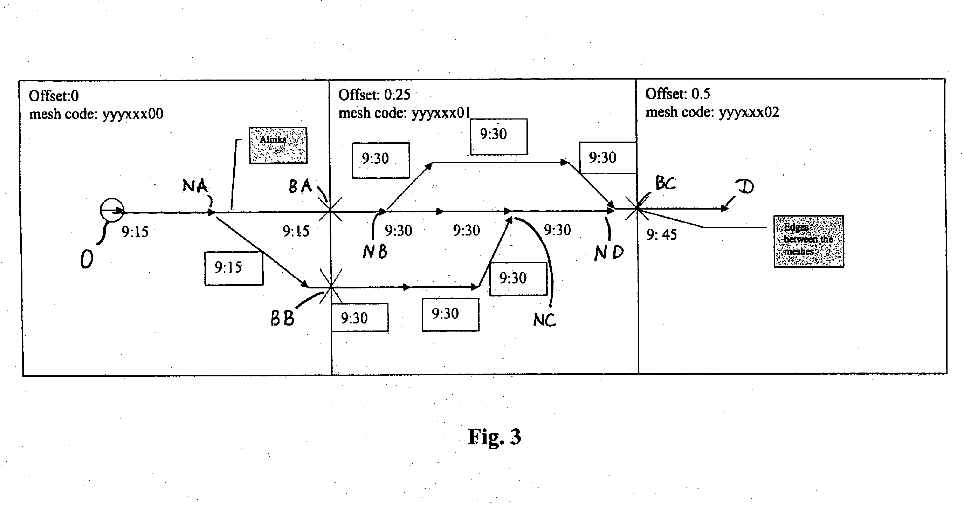

The principle of the mesh-based calculation is explained in the following referring to Fig. 3, showing a simple application of the general principle. Fig. 3 shows three adjacent square meshes, namely mesh yyyxxx00, yyyxxx01 and yyyxxx02. Mesh yyyxxx00 is the mesh including the starting point, which is hereinafter named origin mesh. The meshes are separated by edges or boarderlines.

The time offset 0 is assigned to origin mesh. A specific offset, in Fig. 3 the offset value 0.25, is assigned to mesh yyyxxx01, i.e. the next neighbour to the origin mesh. The offset value 0.25 is a value to be multiplied with a time standard, in the present example 1 hour, such that the time offset of mesh yyyxxx01 is 0.25 x 60 min = 15 min. In the simple example shown in Fig. 3, only one direction of transit from one mesh to the next mesh is considered. In the example of Fig. 3, it is the transit direction from the origin mesh via the next neighbour mesh to mesh yyyxxx02. Further, the offset value 0.5 is assigned to mesh yyyxxx02, i.e. considering the time standard of 1 hour, an offset time of 30 min.

Before explaining how the offset values are calculated, the classification of the roads (links) shown in Fig. 3 is explained. The road (link) from the origin point O in mesh yyyxxx00 via nodes NA, NB, NC, ND to the destination D is a high-class road such as a highway or motorway allowing high speeds which will be road type and offset type H. The road from node NA via the boarder point BB to node BC is considered to be a mid-class road being road type and offset type M. The road (link) connecting nodes NB and ND bypassing node NC is a low-class road being classified as road type and offset type L.

Furthermore, it is assumed as exemplary non-limiting examples that offset type H equals an offset value of 0.25, offset type M equals an offset value of 0.4, and offset type L equals an offset value of 0.7.

In the most simple implementation of the mesh-based calculation, one offset value is assigned to each mesh, which is the smallest possible offset value depending on the classification of the roads entering the mesh in the direction of transition. That means, in case of Fig. 3, the direction of transition is the direction from origin point O to destination D. Accordingly, at the boarderline between mesh yyyxxx00 and mesh yyyxxx01, there are two links crossing the edge (boarderline), namely a link of type H at boarderline crossing point BA and a link of type M at boarderline crossing point BB. Accordingly, the mesh (i.e. all links in the mesh) will receive the offset value for road type H, i.e. the offset value 0.25.

Obviously, as only one link (road) is crossing the boarderline between mesh yyyxxx01 and yyyxxx02, namely a link of type H, mesh yyyxxx02 receives offset value 0.25, if only the offset in respect to the previous mesh is considered. As the method aims at an estimation of travel time based on the point of origin, the offset value for the mesh is calculated according to the following formula (1)

Offset to be assigned to each mesh = Offset value of its upstream mesh + Relative mesh offset to its upstream mesh

In the present case, the offset value of mesh yyyxxx02 = offset of its upstream mesh yyyxxx01 (= 0.25) + relative mesh offset to its upstream mesh yyyxxx01 (= 0.25) = 0.5.

Assuming that the link between node ND and destination D is a link of type L (instead of type H), the relative offset value for mesh yyyxxx02 = 0.95 (0.25 + 0.7).

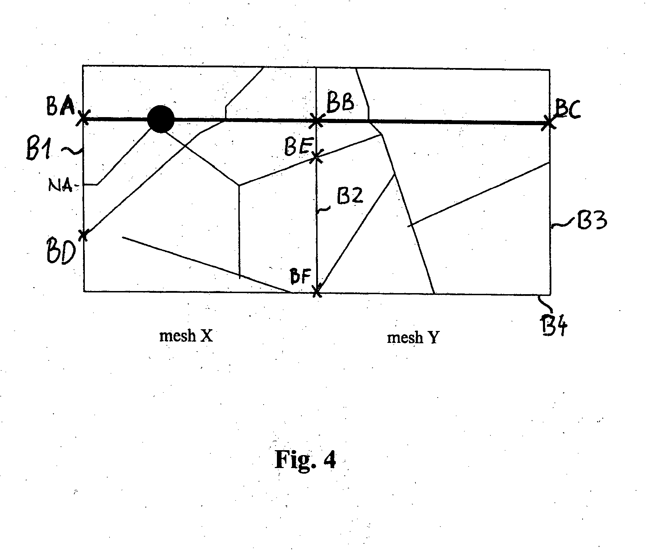

A modification of the above principle is now explained referring to Fig. 4. Fig. 4 shows one mesh X and one adjacent mesh Y. The direction of a transition considered in the following is from boarderline B 1 via boarderline B2 to boarderline B3. The link from boarderline crossing point BA via boarderline crossing point BB to boarderline crossing point BC is a link of type H. Node NA is an exit from this link of type H to a link of type M.

In the first approach described with respect to Fig. 3, in the time slice calculation of step S4, all links within one mesh are considered together and the mesh receives a single offset value. Accordingly, there was only one common offset for all links of one mesh.

However, in reality, there usually is a variety of different links in the road network even within one mesh. The precision of the mesh-based calculation can be improved by considering such a variety.

In the present modification, in addition to the type of the roads coming in via a specific boarderline, also the connection of the links of different types within the mesh is considered. In the present case, the basic information used for this purpose is the availability and optionally the number of exits from the links of type H, i.e. of high-class link exits.

In the example shown in Fig. 4, mesh X includes such a high-class link exit, namely node NA.

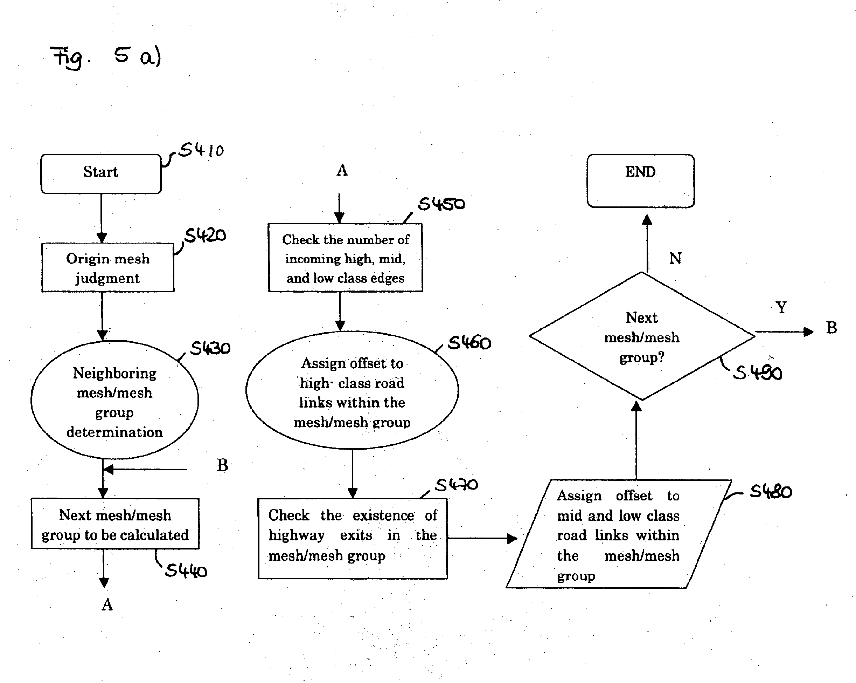

In the modification described with respect to Fig. 4, one mesh will receive up to three different offset values for the different types of links included in the mesh as explained with respect to Fig. 5a) and b) in the following.

Referring to Fig. 5a), the time slice calculation (S4 of Fig. 2a) starts in step S410. First, an origin mesh judgement is made in step S420 in order to determine the origin mesh. In step S430, a neighbouring mesh/mesh group determination is made, two different examples of which will be explained further below, which determination is not important at present for explaining the assignment of the different offsets. In step S440, one of the mesh/mesh groups determined in step S430 is selected to perform the time slice calculation.

In step S450, the number of incoming links (roads) via the edges (boarderlines) for each of the different link classes H (high), M (mid) and L (low) is determined. For example, mesh X has one incoming link of type H at boarderline crossing point BA and one incoming link of type M at boarderline crossing point BD, if the boarderline B 1 is considered. Mesh Y, considering boarderline B2, has one incoming link of type H at boarderline crossing point BB, one incoming link of type M at boarderline crossing point BE, and one incoming link of type L at boarderline crossing point BF.

In step S460, the offset value for links of type H is assigned to the corresponding links within the meshes of the mesh/mesh group processed at present (selected in step S440).

Then, in step S470, the existence of high-class link exits such as node NA in the meshes of the mesh/mesh group is checked. Accordingly, one high-class link exit is found in mesh X but no high-class link exit is found in mesh Y. In step S480, offsets are assigned to the links of type M and L within the meshes of the mesh/mesh group.

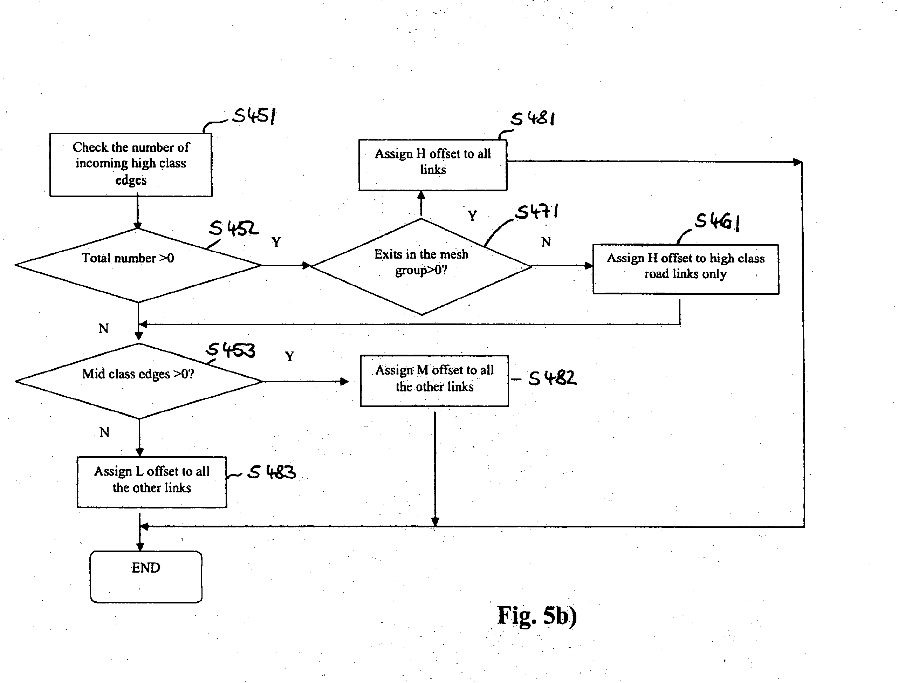

A specific example of steps S450 to S480 will be explained hereinafter referring to Fig. 5b). Before that, the following steps of the time slice calculation step S4 are explained. Following to step S480, it is determined whether there is a next mesh/mesh group to be considered. If YES, the process flow returns to step S440 as shown by arrow B. If NO, the time slice calculation of step S4 ends.

Referring to Fig. 5b), a specific implementation of steps S450 to S480 is explained, which is not limiting. As can be seen from Fig. 5b), the order of checking and assigning is not absolutely identical to the order in steps S450 to S480, which makes clear that it is essential that the corresponding steps are present but not that they are exactly in the corresponding order.

Accordingly, in step S451, the number of incoming links of type H at a specific boarderline (edge) is checked. If the total number of incoming links of type H is larger than 0 (i.e. at least one incoming link of type H is present) (YES in S452), the number of exits from links of type H in the meshes of the mesh group is checked in step S471. If the check in S471 results in that there is an exit from a link of type H in a corresponding mesh (YES in S471), the offset of type H (in the above example 0.25) is assigned to all links (of types H, M and L) in the corresponding mesh in step S481 and the process of steps S450 to S480 ends. If in step S471 no exit from a link of type H in the corresponding mesh is found (NO in S471), the offset of type H is assigned to the links of type H only in the corresponding mesh in step 461, and the process flow continues to step S453. The process also continues to step 453, if the number of incoming links of type H was 0 in steps S451 and S452. In step S453, it is determined whether the number of incoming links of type M is larger than 0. If YES, the offset of type M is assigned to all links (in case of NO in step of S452) or to all other links (in case of NO in step S471) in the corresponding mesh in step S482. Then, the process flow of steps S450 to S480 ends.

If the determination in step S453 is NO, i.e. if no incoming links of type M are detected in step S453, the process assigns the offset of type L to all or all other links in step S483.

As already said, the implementation shown in Fig. 5b) is only an example. Also, the number of exits from links of type H, or the presence and/or the number of exits from links of types M can be considered. The essential teaching of Fig. 5a) and b) results in that it is possible to consider the presence of connecting nodes between links of different type.

This makes it possible to reflect facts like the one that, when mesh X is entered via a link of type H, the total travel speed also on a link of type M connecting node NA and boarderline crossing point BE is higher as if the total travel in mesh X was done on links of type M or L only. On the other hand, in mesh Y, if mesh Y is entered via boarderline crossing point BB, there is no possibility to change to a link of type M or L, such that these links can not benefit from the higher travel speed on the link of type H.

In the above modification, different offsets can be assigned to links of different type in the same mesh. The assignment of different offsets for different types of links is not limited to the consideration of the presence of exits or the like. Of course, different offsets can be assigned to links of different type in the same mesh also without considering the presence of exits or the like.

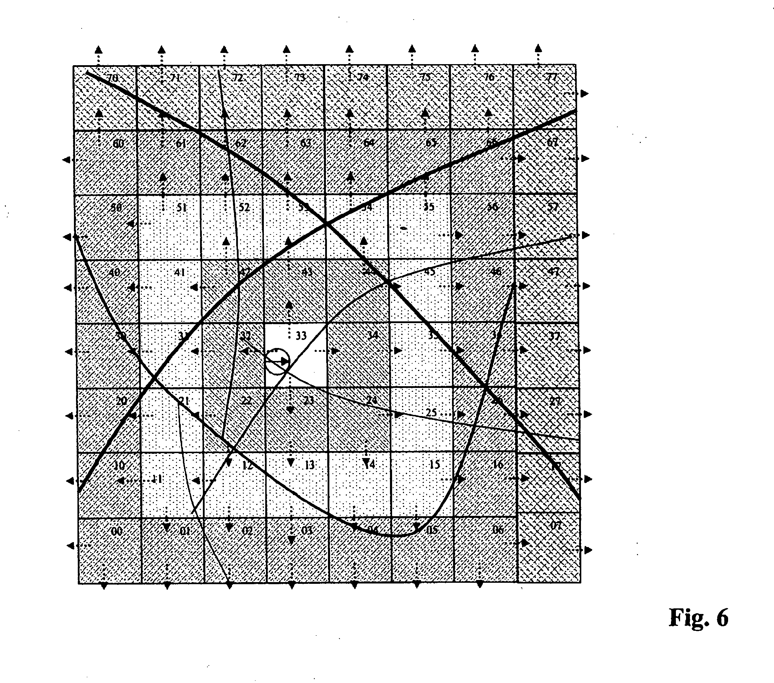

Next, a flow pattern for calculating the offset values for the meshes is described with respect to Fig. 6. The example described with respect to Fig. 6 is one of the two examples mentioned above with respect to the neighbouring mesh/mesh group determination made in step S430. Fig. 6 shows a mesh grid portion consisting of a matrix of 8 x 8 meshes, i.e. 64 meshes. The starting position obtained in step S1 is located in mesh 33. The meshes are square. Accordingly, each mesh has four boarderlines to its neighbours which boarderlines are represented by the adjacent sides of the squares. It is obvious from Fig. 6 that the origin mesh 33 including the starting position has four boarderlines and that there are outgoing links only crossing these four boarderlines. The time offset 0 is assigned to origin mesh 33.

Further below, a modification of treating the origin mesh or the surrounding of the starting position is discussed, but for the time being, we consider only the time offset 0 for the origin mesh.

The flow pattern shown in Fig. 6 represents an increasing distance of the meshes from the origin mesh according to the following rules:

a) Each mesh (except the origin mesh) has only two boarderlines where the links crossing the boarderlines are considered.

b) If there are incoming links in one mesh, the boarderline opposite to the boarderline having the crossing incoming links will be determined to be the boarderline having the outgoing links.

c) In a mesh having no incoming links (which are the meshes on the diagonal lines intersecting the origin mesh), the boarderlines having outgoing links are selected to be the ones continuous to boarderlines of neighbouring meshes having outgoing links.

Accordingly, the flow pattern represented by the arrows in Fig. 6 represents transitions from one mesh to an adjacent or neighbouring mesh in the order of transitions representing a flow pattern of increasing distance. With respect to those meshes having no incoming links (all the "corner meshes" 00, 11, 22, 44, 55, 66, 77, 06, 15, 24, 42, 51, 60 located on diagonal lines intersecting the origin mesh 33), it has to be considered that these meshes have no incoming links which are considered, and that they have the same "distance" from the origin mesh as the meshes located between two "corner meshes" in the same line or row of the matrix. Accordingly, also these "corner meshes" represent meshes in the flow pattern representing an increasing distance from the origin mesh.

The assignment of offset values to each of the meshes can be done according to the calculation described with respect to step S4.

Of course, in this case, a solution has to be found for the "corner meshes", because these corner meshes do not have incoming links such that the calculation of an offset value based on the upstream mesh and the incoming links is not possible.

The preferred assignment approach for assigning offset values to the "corner meshes" is the assignment of the lower value of the next neighbours of the same distance in the flow pattern. For example, in case of corner mesh 42, it is the lower one of the mesh values of meshes 32 and 43.

A specific modification of assigning offset values according to the flow pattern shown in Fig. 6 is the assigning of the same value to all meshes arranged on the same side (north, west, south, east) of the origin mesh on the same level of distance from the origin mesh. Preferably, this same value is the lowest value of all mesh values of these meshes arranged on the same side at the same level of distance. As an example, meshes 25, 35, 45 are arranged on the same side (east) of origin mesh 33 at the same level of distance (represented by the same hatching). Lets assume that the offset value for mesh 25 is 0.8, the offset value for mesh 35 is 1.4, and the offset value for mesh 45 is 0.65, the lowest mesh value (= 0.65 of mesh 45) is assigned to each of meshes 25, 35 and 45. Correspondingly, meshes of the same level of distance in the flow pattern on the north side, i.e. meshes 52, 53, 54, will have the same offset value, too. Lets assume this offset value is 0.5. Then, the lower one of the two available mesh values, namely 0.5, will be assigned to corner mesh 55. Accordingly, this modification of the flow pattern shown in Fig. 6 has the following additional rules:

d) Assigning one value to all meshes located at the same level of distance on the same side of the origin mesh according to a specific selection rule such as the highest of the values for these meshes or the lowest of the values of these meshes or the average value, and

e) assigning an offset value to a corner mesh selected from the offset values of the neighbouring meshes of the same level of distance according to the same rule as in above d).

It is obvious that numerous modifications can be made. For example, in the flow pattern shown in Fig. 6, it is of course also possible to assign different offsets for different types of links in one mesh to reflect the type of links, the number of exits in the mesh and so on. Another example is that, after the group determination in step S430, the number of incoming links for all meshes of the group is taken to assign offsets to the meshes of the group instead of the number of incoming links per individual mesh.

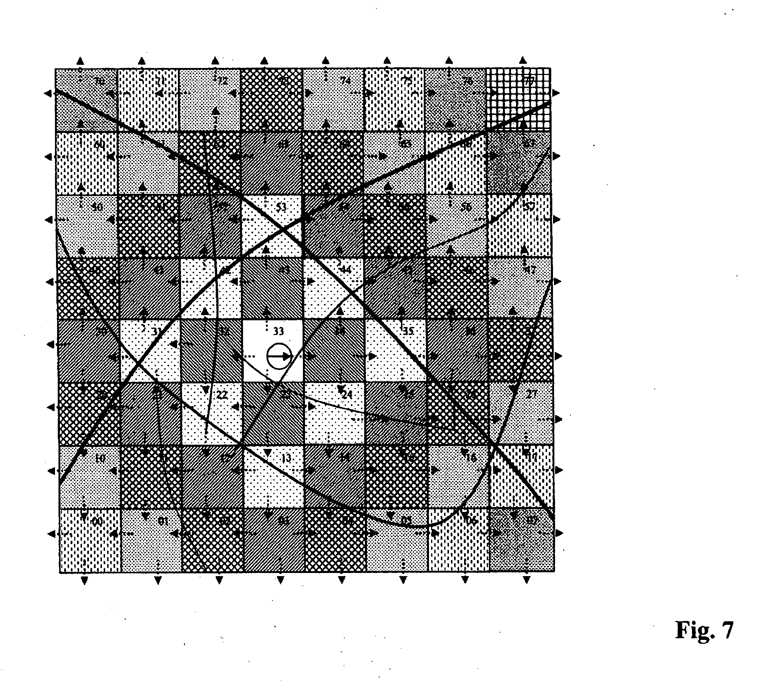

Another example of the neighbouring mesh/mesh group determination of step S430 is described with respect to Fig. 7. In Fig. 7, unlike in Fig. 6, each borderline between adjacent meshes is considered as a borderline having incoming or outcoming links. Therefore, there are no "corner meshes" as in the flow pattern shown in Fig. 6. The flow pattern shown in Fig. 7 is also a flow pattern representing an increasing distance from the origin mesh, where the increasing distance is represented by the number of borderlines crossed in the flow starting from the origin mesh.

Accordingly, the meshes 23, 32, 34, 43 are at the same level of distance from the origin mesh 33. The meshes 13, 22, 24, 31, 35, 42, 44, 53 are at the next level of distance from the origin mesh. The meshes 03, 12, 14, 21, 25, 30, 36, 41, 45, 52, 54, 63 are consequently at the next level of distance and so on.

In the flow pattern shown in Fig. 7, the same procedures for calculating and assigning offset values as described with respect to step S4 can be used. In the flow pattern of Fig. 7, it is preferred to assign individual offset values to each mesh. Nevertheless, also assigning identical mesh values according to the level of distance or the like is feasible although not preferred.

In Fig. 6, 7, the neighbouring mesh/mesh group determination of step S430 and the next mesh/mesh group selection of step S440 can be considered as follows. In Fig. 6, if each of the meshes receives an individual value, the neighbouring mesh/mesh group determination is preferably done in the flow sequence. That means, meshes 33, 34 are grouped or alternatively, all the meshes in one direction of flow, that means, at first, meshes 33, 43, meshes 33, 34, meshes 33, 23, and meshes 33, 32 are grouped and the corresponding offset values are calculated. Then, the mesh values for the corner meshes 22, 24, 42, 44 are calculated. Then, meshes 22, 12, meshes 23, 13, meshes 24, 14, meshes 24, 25, meshes 34, 35, and so on are grouped and the corresponding offset values are calculated and assigned. Then, the offset values for the corner meshes 11, 15, 51, 55 are calculated, and the process continues according to this logic. If common offset values should be assigned to all meshes at the same level of distance at one side of the origin mesh, this intermediate step is done before calculating the values of corner meshes.

In Fig. 7, the determination of step S430 is done in a similar way. That means, at first meshes 33, 23, meshes 33, 32, meshes 33, 43 and meshes 33, 34 are grouped and the corresponding offset values are calculated and assigned. Then, whether the group determination is already done beforehand or not, the groups of meshes 23, 22, meshes 23, 13, meshes 23, 24, meshes 32, 22, meshes 32, 31, meshes 32, 42, meshes 34, 24, meshes 34, 35, meshes 34, 44, meshes 43, 42, meshes 43, 53 and meshes 43, 44 are calculated and assigned, and so on. Again, one single offset value per mesh or a plurality of offset values for different types of links with the possibility of considering other factors such as the numbers of exits and so on as already described beforehand can be used in calculating and assigning the offset values. It is obvious that each of the meshes, except the origin mesh and the meshes (23, 32, 34, 43) having common borderlines with the origin mesh, has two borderlines with incoming links. Therefore, in order to be able to assign one offset value or one offset value for the specific type of links in the mesh, it is necessary to specify a rule which of the values has to be selected. This can be done, for example, by assigning the lower one of the offset values resulting from the two borderlines, but not necessarily, or the higher one or the average value or by defining other rules.

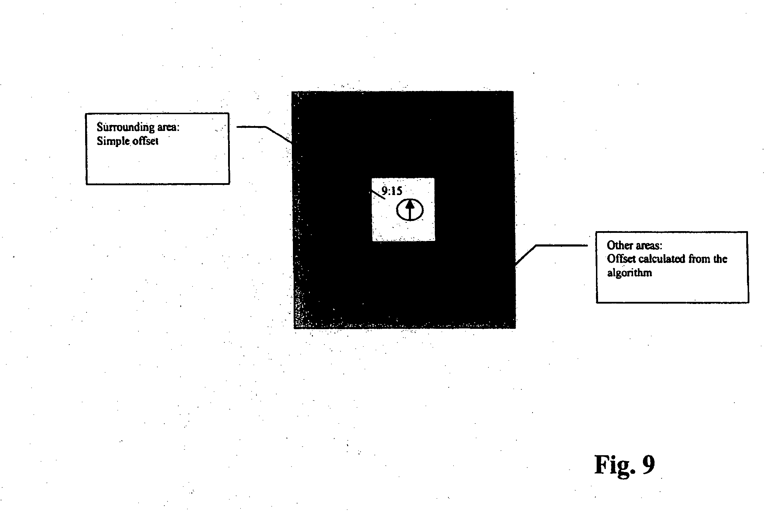

With respect to the origin mesh or the surrounding area of the starting position, it is possible that a differentiation of the link (road) classes is not necessary because of the limited distance or the limited possibilities of access to the road network. Therefore, in a modification of the above described methods, a simple offset is assigned to the surrounding area, which can consist of a certain number of meshes around the origin mesh, without considering the number or the type of incoming links. Fig. 9 shows such a modification in a simplified way.

In another modification, the offset calculation considers a user preference in using the link type. For example, if the user preference is using highways or motorways, i.e. links of type H, or if the user preference is using the shortest route, or the like, this can be considered in calculating the mesh offsets.

In the first case, for example, the offset value to be chosen for the links of corresponding class. It can be reduced in comparison to the normal offset value described above. It is also possible to simply neglect certain other link classes, where possible.

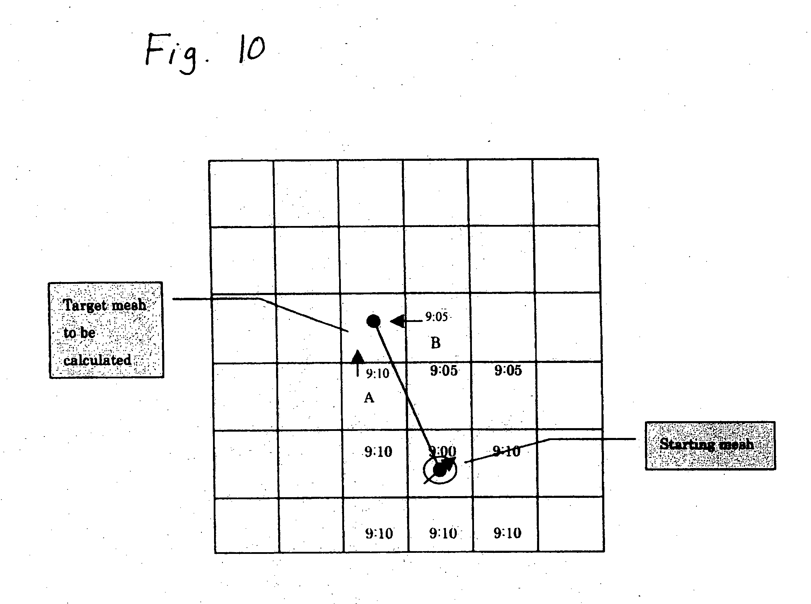

If the user preference is the shortest route, one possibility of adapting the method is the technique shown in Fig. 10. The straight line between the origin mesh including the starting position (starting mesh) and the mesh including the destination (target mesh), e.g. the straight line between the centers of the two meshes or the straight line between the starting point and the destination or the like, is drawn. Then, as can be seen in the example of Fig. 10, it has to be decided which of the two offset values, the one of mesh A or the one of mesh B, are selected for the calculation of the offset value for the target mesh. Since the user has the preference of the shortest route, the value of mesh A is selected as this straight line crosses mesh A, although the offset value of mesh B is smaller.

A traffic and/or event map as mentioned with respect to steps S7, S70 includes, for example, the traffic forecast, e.g. by different coloring of the corresponding routes, time relevant information (e.g. football match, holiday traffic flow, etc.) by predefined icons placed on the displayed map, and so on. Therefore, a user can see, if the user wants to start at point A at time T1 to be at point B to attend a concert at time T2, that there will be a traffic jam at point C because of a football match, if road X is used. This can help the user to plan his/her time and to make a decision even without using a route search function.

It is explicitly stated that all value ranges or indications of groups of entities disclose every possible intermediate value or intermediate entity for the purpose of original disclosure as well as for the purpose of restricting the claimed invention, in particular as limits of value ranges.

## Claims

**1.** A method of determining a travel related time carried out by processing means in a navigation system, comprising the steps of:

obtaining (S1) a start position; and
obtaining (S3) map information including link information and mesh information, the mesh information dividing an area covered by the map information in a mesh grid having a plurality of adjacent meshes; **characterized by** processing (S4) the information obtained in the obtaining steps (S1, S3) to calculate an estimated travel related time for specific ones of the meshes based on an origin mesh including the starting position by assigning time offsets to the specific ones of the meshes based on a type and/or a number of links entering the specific ones of the meshes starting from the origin mesh and in the order of transitions from one mesh to another mesh over mesh borders in a flow pattern representing increasing distances from the origin mesh.

2.  The method according to claim 1, wherein
the mesh grid consists of a plurality of polygons which are adjacent to each other, where the adjacent sides of the polygons define the mesh borders.

3.  The method according to claim 2, wherein
the polygons are selected from a group including at least triangles, rectangles, hexagons and octagons, and are preferably selected to be squares.

4.  The method according to one of claims 1 to 3, wherein
the same time offset value is assigned to each of the specific meshes extending in one line on one side of the origin mesh at the same level of increasing distance from the origin mesh, or individual time offset values are assigned to each of the specific ones of the meshes.

5.  The method according to one of claims 1 to 4, wherein
the time offset assigned to the specific one of the meshes may include sub time offset values for different types (H, M, L) of links included in the specific one of the meshes.

6.  The method according to claim 5, wherein
in the assigning of time offsets including sub time offset values, the assignment is based on link information on the presence of exits from links of specific types.

7.  The method according to one of claims 1 to 6, wherein
the result of the processing step (S4) is used

a) in a time map generating step (S5) to generate a time map, and/or
b) in a traffic and/or event map generating step (S7), and/or
c) in a route searching step (S10), in which route searching step (S 10) the estimated travel/passing times for the specific ones on the meshes are used to restrict the map information to be searched in an optimum route search.

8.  A navigation system, comprising
memory means (17, 2), adapted for storing at least a map database (21) including map information including link information and mesh information, the mesh information dividing an area covered by the map information in a mesh grid having a plurality of adjacent meshes, and
processing means (11 to 18),
**characterized in that** the processing means is adapted for calculating an estimated travel related time for specific ones of the meshes based on an origin mesh including a start position by assigning time offsets to specific ones of the meshes based on a type and/or a number of links entering the specific ones of the meshes starting from the original mesh and in the order of the transitions from one mesh to another mesh over mesh boarders in a flow pattern representing increasing distances from the origin mesh.

9.  The navigation system according to claim 8, which is adapted to perform the method steps of any of claims 2 to 7.

10. A computer program including program code which, when running on a correspondingly programmed computer, implements the method of any of claims 1 to 7.

**EP 1 754 955 B1**

**Patentansprüche**

1. Verfahren zum Bestimmen einer reisebezogenen Zeit, das durch ein Prozessormittel in einem Navigationssystem ausgeführt wird, mit den Schritten:

   Erhalten (S1) einer Startposition; und
   Erhalten (S3) von Karteninformation, die Verbindungsinformation und Netzinformation enthält,
   in der die Netzinformation ein durch die Karteninformation abgedecktes Gebiet in ein Maschengitter unterteilt,
   das eine Mehrzahl von benachbarten Maschen aufweist; **gekennzeichnet durch**
   Verarbeiten (S4) der in den Schritten des Erhaltens (S1, S3) erhaltenen Information zum Berechnen einer
   geschätzten reisebezogenen Zeit für spezifische der Maschen basierend auf einer Ursprungsmasche, die die
   Startposition enthält, **durch** Zuordnen von Zeitversätzen zu spezifischen der Maschen basierend auf einem
   Typ und/oder einer Anzahl von Verbindungen, die in die spezifischen der Maschen eintreten, beginnend bei
   der Ursprungsmasche und in der Reihenfolge der Übergänge von einer Masche zu einer anderen Masche über
   Maschengrenzen in einem Flussmuster, das ansteigende Abstände von der Ursprungsmasche repräsentiert.

2. Verfahren nach Anspruch 1, bei dem
   das Maschengitter aus einer Mehrzahl von Polygonen besteht, die benachbart zueinander sind, bei dem die benachbarten Seiten der Polygone die Maschengrenzen definieren.

3. Verfahren nach Anspruch 2, bei dem
   die Polygone aus einer Gruppe ausgewählt sind, die mindestens Dreiecke, Rechtecke, Sechsecke und Achtecke enthält, und sie bevorzugt als Quadrate ausgewählt werden.

4. Verfahren nach einem der Ansprüche 1 bis 3, bei dem
   derselbe Zeitversatzwert jeder der spezifischen Maschen zugeordnet wird, die sich in einer Linie auf einer Seite der Ursprungsmasche auf demselben Niveau des zunehmenden Abstands von der Ursprungsmasche erstrecken, oder individuelle Zeitversatzwerte jeder der spezifischen Maschen zugeordnet werden.

5. Verfahren nach einem der Ansprüche 1 bis 4, bei dem
   der Zeitversatz, der der spezifischen der Maschen zugeordnet wird, Unter-Zeitversatzwerte für unterschiedliche Typen (H, M, L) von Verbindungen, die in der spezifischen der Maschen enthalten sind, aufweisen kann.

6. Verfahren nach Anspruch 5, bei dem
   bei dem Zuordnen von Zeitversätzen, die Unter-Zeitversatzwerte aufweisen, die Zuordnung auf Verbindungsinformation über das Vorhandensein von Austritten von Verbindungen spezifischen Typs basiert.

7. Verfahren nach einem der Ansprüche 1 bis 6, bei dem
   das Ergebnis des Verarbeitungsschritts (S4) verwendet wird

   a) in einem Zeitkartenerzeugungsschritt (S5) zum Erzeugen einer Zeitkarte, und/oder
   b) in einem Verkehrs- und/oder Ereigniskartenerzeugungsschritt (S7), und/oder
   c) in einem Routensuchschritt (S 10), in dem die geschätzten Reise-/Durchgangszeiten für die spezifischen der Maschen zum Beschränken der Karteninformation, die bei der Suche nach einer optimalen Route durchsucht wird, verwendet werden.

8. Navigationssystem, mit
   einem Speichermittel (17, 2), das angepasst ist zum Speichern von mindestens einer Kartendatenbank (21), die Karteninformation mit Verbindungsinformation und Netzinformation enthält, in der die Netzinformation ein durch die Karteninformation abgedecktes Gebiet in ein Maschengitter unterteilt, das eine Mehrzahl von benachbarten Maschen aufweist, und
   einem Prozessormittel (11 bis 18),
   **dadurch gekennzeichnet, dass** das Prozessormittel angepasst ist zum Berechnen einer geschätzten reisebezogenen Zeit für spezifische der Maschen basierend auf einer Ursprungsmasche, die die Startposition enthält, durch Zuordnen von Zeitversätzen zu spezifischen der Maschen basierend auf einem Typ und/oder einer Anzahl von Verbindungen, die in die spezifischen der Maschen eintreten, beginnend bei der Ursprungsmasche und in der Reihenfolge der Übergänge von einer Masche zu einer anderen Masche über Maschengrenzen in einem Flussmuster, das ansteigende Abstände von der Ursprungsmasche repräsentiert.

**9.** Navigationssystem nach Anspruch 8, das angepasst ist zum Ausführen der Verfahrensschritte nach einem der Ansprüche 2 bis 7.

**10.** Computerprogramm, das Programmcode enthält, der, wenn er auf einem entsprechend programmierten Computer läuft, das Verfahren nach einem der Ansprüche 1 bis 7 implementiert.


**Revendications**

**1.** Une méthode de détermination d'un temps de parcours mise en oeuvre par des moyens de traitement dans un système de navigation, comprenant les étapes suivantes :

obtention (S1) d'une position de départ ; et
obtention (S3) de données cartographiques comprenant des données de liaison et des données de maillage, les données de mailles divisant une zone couverte par les données cartographiques dans un maillage de mailles présentant une pluralité de mailles adjacentes ; **caractérisée par**
un traitement (S4) des données obtenues dans les étapes d'obtention (S1, S3) pour calculer un temps de parcours estimé pour certaines particulières des mailles basé sur un maillage d'origine comprenant la position de départ en affectant des temps de décalage à certaines particulières des mailles en partant du maillage d'origine et dans l'ordre de transitions d'une maille à une autre maille par-dessus des frontières de mailles dans un motif de flux représentant des distances augmentant à partir de la maille d'origine.

**2.** La méthode selon la revendication 2, dans laquelle
le maillage de mailles consiste en une pluralité de polygones qui sont adjacents les uns aux autres, où les côtés adjacents des polygones définissent les frontières des mailles.

**3.** La méthode selon la revendication 2, dans laquelle
les polygones sont sélectionnés à partir d'un groupe comprenant au moins des triangles, des rectangles, des hexagones et des octogones, et sont avantageusement sélectionnés de manière à être carrés.

**4.** La méthode selon l'une quelconque des revendications 1 à 3, dans laquelle la même valeur de temps de décalage est affectée à chacune des mailles particulières s'étendant dans une ligne sur un côté de la maille d'origine au même niveau de distance croissante à partir de la maille d'origine, ou des valeurs de temps de décalage individuelles sont affectées à chacune des certaines particulières des mailles.

**5.** La méthode selon l'une quelconque des revendications 1 à 4, dans laquelle le temps de décalage affecté aux certaines particulières des mailles peut comprendre des sous-valeurs de temps de décalage pour différents types (H, M, L) de liaisons comprises dans les certaines particulières des mailles.

**6.** La méthode selon la revendication 5, dans laquelle
dans l'affectation des temps de décalage comprenant des sous-valeurs de temps de décalage, l'affectation est basée sur des données de liaison sur la présence de sorties à partir des liaisons de types particuliers.

**7.** La méthode selon l'une quelconque des revendications 1 à 6, dans laquelle le résultat de l'étape de traitement (S4) est utilisé

a) dans une étape de génération d'une carte temporelle (S5) pour générer une carte temporelle, et/ou
b) dans une étape de génération d'une carte de circulation et/ou d'événements (S7), et/ou
c) dans une étape de recherche de route (S10), dans laquelle l'étape de recherche de route (S10) les temps de parcours/passages estimés pour les certaines particulières des mailles sont utilisés pour restreindre les données cartographiques destinées à être recherchées dans une recherche de route optimale.

**8.** Un système de navigation, comprenant
des moyens de mémoire (17, 2), adaptés pour stocker au moins une base de données cartographique (21) comprenant des données cartographiques comprenant des données de liaison et des données de mailles, les données de mailles divisant une zone couverte par les données cartographiques dans un maillage de mailles présentant une pluralité des mailles adjacentes, et des moyens de traitement (11 à 18),
**caractérisé en ce que** les moyens de traitement sont adaptés pour calculer un temps de parcours estimé pour certaines particulières des mailles basé sur une maille d'origine comprenant une position de départ en affectant des temps de décalage aux certaines particulières des mailles basé sur un type et/ou un nombre de liaisons entrant dans les certaines particulières des mailles en partant de la maille d'origine et dans l'ordre des transitions d'une maille à une autre maille par-dessus des frontières de mailles dans un motif de flux représentant des distances augmentant à partir de la maille d'origine.

9. Le système de navigation selon la revendication 8, qui est adapté pour effectuer les étapes de la méthode selon l'une quelconque des revendications 2 à 7.

10. Un programme d'ordinateur comprenant un code de programmation qui, lorsqu'il est démarré sur un ordinateur programmé de manière adéquate, implémente la méthode selon l'une quelconque des revendications 1 à 7.

EP 1 754 955 B1

| Time slice calculation module | ~ 11 |

| Position determining module | ~ 12 |

| Route search module | ~ 13 |

| Map drawing module | ~ 14 |

| Communication module | ~ 15 |

| Other application module | ~ 18 |

| Input/Output modules | ~ 16 |

| Memory module | ~ 17 |

Navigation unit    ~ 1

Mesh information

Road map database — 21

Other geo contents — 24

Traffic database — 22

Other event database — 23

2

**Fig. 1**

Start

Starting position acquisition — S1

Starting time acquisition — S2

Mesh information acquisition — S3

Time slice calculation — S4

Time map spread — S5 ⟹ Output 1: Time map to end device display — S50

Traffic data or other time relevant event data search — S6

Traffic map/event map building — S7 ⟹ Output 2: traffic/event map to end device display — S70

A

Fig. 2 a)

Fig. 2 b)

EP 1 754 955 B1

Offset:0
mesh code: yyyxxx00

Offset: 0.25
mesh code: yyyxxx01

Offset: 0.5
mesh code: yyyxxx02

Alinks

9:30

9:30

9:30

NA

BA

BC

D

9:15

9:15

9:30

9:30

9:30

9: 45

NB

ND

O

9:15

9:30

9:30

9:30

Edges
between the
meshes

BB

9:30

9:30

NC

**Fig. 3**

mesh X                    mesh Y

**Fig. 4**

EP 1 754 955 B1

# Fig. 5 a)

```
        ┌──────────────┐
        │    Start     │── S410
        └──────┬───────┘
               │
               ▼
        ┌──────────────┐
        │ Origin mesh  │── S420
        │  judgment    │
        └──────┬───────┘
               │
               ▼
         ╱────────────╲
        ╱ Neighboring  ╲── S430
        │  mesh/mesh    │
        ╲   group      ╱
         ╲determination╱
          ───────┬─────      B
                 │◄───────────
                 ▼
        ┌──────────────┐
        │ Next mesh/mesh│
        │group to be    │
        │ calculated    │
        └──────┬───────┘
               │  ╲ S440
               ▼
               A
```

```
        A
        │
        ▼
   ┌────────────────┐
   │ Check the number of │── S450
   │ incoming high, mid, │
   │ and low class edges │
   └────────┬───────┘
            │
            ▼
     ╱──────────────╲
    ╱ Assign offset to╲── S460
    │ high- class road │
    │  links within the│
    ╲ mesh/mesh group ╱
     ──────┬──────────
           │
           ▼
   ┌────────────────┐
   │ Check the existence of │── S470
   │ highway exits in the   │────────►
   │ mesh/mesh group        │
   └────────────────┘
```

```
        ┌──────────────┐
        │    END       │
        └──────▲───────┘
               │ N
         ╱──────────╲
        ╱   Next     ╲
       ╱  mesh/mesh   ╲───── Y ────► B
       ╲   group?     ╱
        ╲            ╱── S490
         ──────▲─────
               │
        ╱─────────────╲
       ╱ Assign offset to╲── S480
       │ mid and low class│
       │ road links within│
       │ the   mesh/mesh  │
       ╲ group           ╱
        ─────────────────
```

_S451_

Check the number of
incoming high class
edges

_S481_

Assign H offset to all
links

_S452_    Y

Total number >0

_S471_

Y    N

Exits in the mesh
group>0?

_S461_

Assign H offset to high class
road links only

N

_S453_    Y

Mid class edges >0?

Assign M offset to all
the other links    _S482_

N

Assign L offset to all
the other links    _S483_

END

**Fig. 5b)**

Fig. 6

Fig. 7

Fig. 8

Other areas:
Offset calculated from the algorithm

9:15

Surrounding area:
Simple offset

Fig. 9

22

EP 1 754 955 B1

Fig. 10

Target mesh to be calculated

Starting mesh

9:05
B

9:10
A

9:05    9:05

9:10    9:00    9:10

9:10    9:10    9:10

Link travel
time (min)

Fig. 11

Fig. 12

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1496338 A2
- JP 2004301677 A
- EP 1505370 A1
- US 2003074132 A1